# EUROPEAN PATENT SPECIFICATION

(11) **EP 3 548 762 B1**
(45) Date of publication and mention of the grant of the patent: **01.09.2021**
(21) Application number: 17808881.1
(22) Date of filing: 01.12.2017
(51) Int. Cl.: B60K 11/06

(54) **COOLING SYSTEM FOR ENGINES**
KÜHLSYSTEM FÜR MOTOREN
SYSTÈME DE REFROIDISSEMENT POUR MOTEURS

(30) Priority: 02.12.2016 IT 201600122590
(43) Date of publication of application: 09.10.2019
(73) Proprietor: PIAGGIO & C. S.p.A., 56025 Pontedera (Pisa) (IT)
(72) Inventor: MARIOTTI, Walter, 56025 Pontedera (PI) (IT); FRESCHI, Giacomo, 56025 Pontedera (PI) (IT)
(74) Representative: Mannucci, Michele
(86) International application number: PCT/EP2017/081197
(87) International publication number: WO 2018/100163

(56) References cited:
- EP-A1- 1 248 007
- CN-Y- 2 430 547
- FR-A2- 2 246 727
- FR-A5- 2 207 559
- KR-B1- 101 349 071

## Description

The present invention relates to a cooling system of an engine, such as for example an air-cooled engine, for example of a scooter, wherein a cooling fan is controlled by a shaft put in rotation by the crankshaft or by the crankshaft itself.

However, it should be meant that an analogous solution can be adopted even for cooling systems of the liquid-operated type, i.e. water-cooled, wherein a radiator is provided, cooled by a fan controlled directly or indirectly by the crankshaft itself.

This cooling system can be also effectively used in engines for a motorcycle, wherein both the fan, provided to draw cooling air, and an electric generator engine, providing the charging of an electric battery for starting the internal combustion engine, and possibly supplying a driving torque when the motorcycle is of the so-called hybrid propulsion type, are keyed to the crankshaft.

The axis of the internal combustion engine is transversal with respect to the longitudinal development of the motorcycle and then it is placed horizontal with respect to a ground plane, as well as perpendicular to a vertical plane which is substantially defined by the rotation plane of the fixed, i.e. not steering, rear wheel, when the motorcycle move forward according to a straight line.

Conveniently, the fan providing the drawing of cooling air for the engine can be directly keyed to an end of the crankshaft which rotates the fan, or to another axle adjacent and parallel to the crankshaft, actuated in rotation thereby.

The positioning of the radiator guard, therethrough the air is drawn, let the radiator not frontally hit by the air flow, but tangentially. The cooling air is then drawn by the fan, the axis thereof being substantially perpendicular to the air flow determined from the forward motion of the motorcycle. Therefore, it is requested that the fan have a predetermined head for tackling the cooling needs of the engine.

In the known examples, wherein the fan is not independently actuated through the rotation of the crankshaft, for example by means of a service electric motor, the rotation regime of the fan does not directly depend upon cooling needs, but it is determined by the rotation regime of the engine.

However, it is apparent that the engine could have cooling needs which do not depend upon the rotation regime of its crankshaft, for example in a starting stage, or with a particularly cold climate.

Nevertheless, in such circumstances the fan is neither stopped nor slowed: it continues to draw an air flow with a certain head onlv depending upon the rotation regime of the crankshaft, not achieving any kind of advantage but at least involving an unrequested increase in the fuel consumption of the engine.

It is to be noted that this drawback occurs whenever a cooling fan is made to rotate with a direct correlation between the rotation thereof and the regime of the engine which is cooled down, then whenever a separate actuation is not provided, for example controlled by temperature sensors.

FR2246727, CN2430547 and KR101349071 disclose cooling fans having a wax type actuator which causes the fan to start when the engine achieves a given temperature. These known devices are of a start-stop type and do not provide any kind of speed modulation for the fan.

The technical problem underlying the present invention is to provide a cooling system for engines allowing to obviate the drawbacks mentioned with reference to the known art.

Such problem is solved by a cooling system as specified in appended claim 1.

In the particular case of an air-cooled internal combustion engine, the shaft is wet by the lubricating oil of the engine, by means of one or more dedicated ducts so that, even in this case, a direct correlation between the fan engagement and the inner temperature of the engine is established.

Moreover, the engine can reach its own operating temperature in a shorter time, by allowing an additional energy saving at the oil circulating pump.

According to a preferred version of the present invention, said actuation means comprises a thermoexpansible material like a wax, which increases its own volumetry when the temperature increases, so that it can operate the clutch engaging the fan. In particular, this material preferably can be a wax and the activation then takes place by means of a wax actuator.

The main advantage of the cooling system according to the present invention lies in allowing an actuation of the fan in a passive way and in a way only depending upon the increase in temperature inside the engine: at low temperature, the fan does not rotate and the fuel consumption results to be optimized.

The present invention will be described hereinafter according to a preferred embodiment thereof, provided by way of example and not for limitative purposes with reference to the enclosed drawings wherein:
* figure 1 shows a perspective view in partial section of a portion of internal combustion engine of a motorcycle incorporation a cooling system according to the present invention;

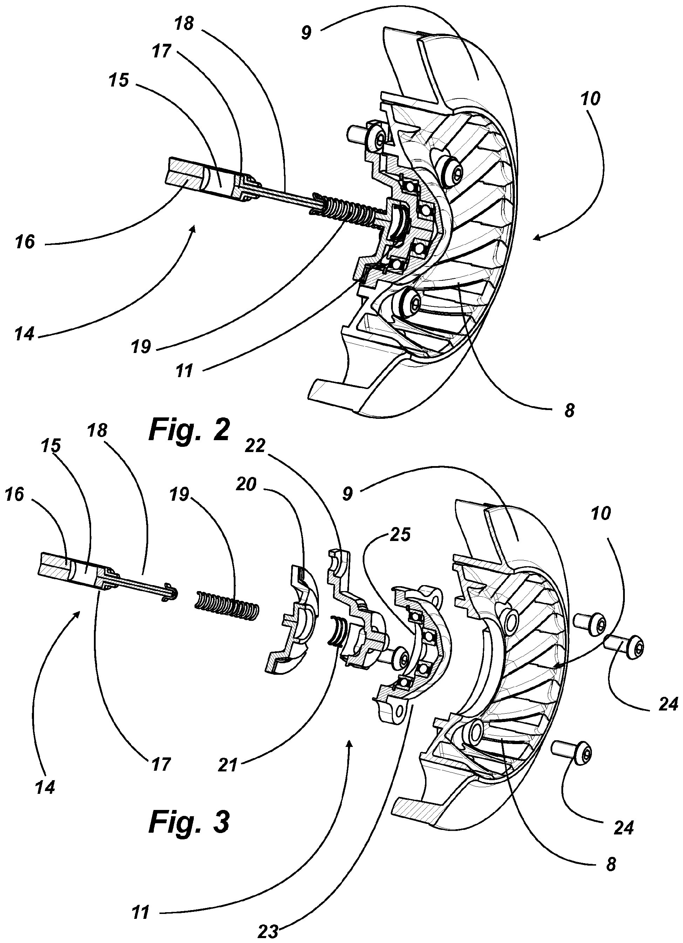

* figure 2 shows a perspective view in partial section of a detail of the cooling system of figure 1; and
* figure 3 shows an exploded perspective view of the detail figure 2.

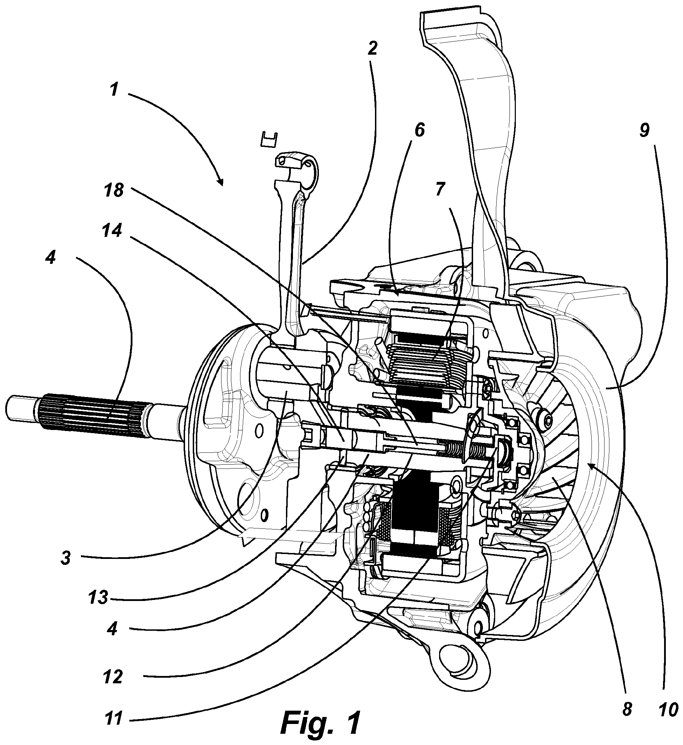

By referring to the figures, a propulsion unit 1 (figure 1) is partially represented. This unit 1 comprises, in the present embodiment, an air-cooled single-cylinder internal combustion engine, a piston rod 2 and a crank 3 thereof is represented, belonging to a crankshaft 4 which transmits the motion to a transmission, not shown.

The crankshaft 4 projects in an opposite direction with respect to the shown elements, and it is keyed to an electric motor 6 comprising respective stator windings 7.

It is to be noted that the crankshaft 4 is transversal with respect to the longitudinal development of the motorcycle and then it is horizontal with respect to a ground plane, as well perpendicular to a vertical plane which is substantially defined by the rotation plane of the fixed, i.e. not steering, rear wheel, when the motorcycle moves forward according to a straight line.

The motor 6 can be a simple current generator simply providing electric current to the combustion engine, and possibly to service members and/or to feed a battery. It is further meant that this electric motor could be operated as starter and as an electric generator engine providing the charging an electric battery, starting the internal combustion engine and possibly supplying a driving torque when the motorcycle is of the so-called hybrid propulsion type.

In the present example, the propulsion unit comprises a cooling system having a cooling fan 8 directly keyed on the crankshaft 4 which then is operated as shaft for actuating the fan, which could be facing towards a radiator arranged on one side of the motorcycle, which in turn will receive an air flow through a protective guard.

It is to be meant that the fan could be keyed on a different actuation shaft with respect to the crankshaft, in case thereby dragged to offset the fan with respect to the crankshaft.

The fan 8 is contained in a casing 9 having a suction aperture 10. The fan 8 is keyed on one end of the crankshaft 4 by means of a clutch 11 which will be described hereinafter.

The crankshaft 4 comprises a longitudinal housing 12, which extends from the internal combustion engine to the end thereon the fan 8 is keyed; in other words the portion of crankshaft 4 going from the engine to the fan 8 is hollow.

Such housing 12 receives means for activating the clutch 11 which is sensible to the temperature of a fluid circulating in the engine.

In particular, the crankshaft 4, close to the engine, comprises a duct for circulating said fluid at said housing 12.

In this particular case, two bypass ducts 13 are provided, symmetrical on opposite sides of the crankshaft, both dipped in the lubricating system of the engine and then filled up with lubricating oil which is at a temperature depending from the temperature of the engine.

The oil, i.e. the fluid circulated within the crankshaft, is placed in contact to the above actuation means which, in the present case, is constituted by a wax actuator 14 having inside thereof a tank 15 filled up with a thermoexpansible material 16, preferably a wax.

The expansion of this material provokes the translation of a piston 17 connected to an actuation rod 18, in contrast with the force of a spring 19, in particular a coil spring, arranged in said housing 12 between the clutch 11 and the distal end of the rod 18.

In particular, the spring 19 is interposed between the wax actuator 14 and the clutch 11. This configuration allows to modulate the load on the clamp 11 and therefore to modulate proportionally the torque transmitted to the fan. The distal end of the first spring 19 is connected to a first clutch element 20 of the clutch 11 acting on a second clutch element 22 facing it. Between said clutch elements 20, 22 there is provided a second clutch spring 21.

In detail, when the wax actuator 14 is actuated, depending on the temperature, it moves the clutch between a non - operational position and an operational position. In detail, it performs a translation on the rod 18 that compresses the first spring 19, which in turn acts on the clutch 11.

The first spring 19 therefore carries out a load calibration function on the clutch 20, 22, allowing to proportionally modulate the fan torque. In this way, the fan torque is modulated according to the temperature.

If the temperature is low, the fan is inactive. When the temperature rises above a threshold value and therefore activates the actuator 14, the fan is activated but at an intermediate rate due to the damping of the spring 19. When the temperature reaches a constant speed, the transmitted torque is maximum.

The first spring 19 also allows an extra run to the actuating rod 18, preventing the pressure in the reservoir 15 being exceeded by breakage limits.

The second clutch element 22, through a bearing 25, is connected to a third clutch element 23 connected to the hub of the fan 8, i.e. the central portion thereof, the connection being so as to implement the dragging of the fan 8 which is fixed to the hub by means of screws 24.

In the light of above described, when the engine is cool, the expansible material 16 has a volume so that the piston 17 and the rod 18 are retracted due to the effect of the force transmitted by the spring 19 and by the detachment spring of the clutch 21. The clutch elements 20, 23 are separated therebetween and the fan 8 is not dragged in rotation.

When the temperature of the engine increases above a certain pre-determined threshold, the oil heats up the expansible material 16 which translates the piston 17 and the rod 18, in opposition to the spring 19. In the clutch 11 the clutch elements 20, 23 are pushed one against the other one by overcoming the force of the detachment spring 21, and the hub 23 drags in rotation the fan 8.

However, it is to be meant that the activation means can assume other shapes, for example be based upon stiff thermoexpansible elements or even other.

To the above-described cooling system a person skilled in the art, with the purpose of satisfying additional and contingent needs, could introduce several additional modifications and variants, however all comprised within the protective scope of the present invention, as defined by the enclosed claims.

## Claims

1. A cooling system of an internal combustion engine, comprising a cooling fan (8) keyed, by means of a clutch (11), to a distal end of an actuation shaft (4) having inside a housing (12) accommodating actuation means of the clutch (11) sensitive to the temperature of a fluid circulating in the engine, wherein said actuation means comprises a thermoexpansible material that increases the volumetry thereof when the temperature increases, said actuation means (14) being apt to operate said clutch (11), through a first spring (19) arranged within said housing (12), interposed between said actuation means (14) and said clutch (11), so as to shift said clutch (11) from a non-operational position to an operational position, to achieve the actuation of said clutch (11); and wherein a distal end of the first spring (19) is connected to a first clutch element (20) of the clutch (11), said first clutch element (20) acting on a second clutch element (22) faced thereto, a clutch detachment spring (21) being provided between the first clutch element (20) and the second clutch element (22).

2. The cooling system of claim 1, wherein the actuation means is a wax actuator (14).

3. The cooling system according to claim 1 or 2, wherein the actuation shaft coincides with the crankshaft (4) of the engine to be cooled down.

4. The cooling system according to claim 3, wherein the crankshaft (4) comprises at least a duct (13) for circulating said fluid at said housing (12).

5. The cooling system according to claim 4, wherein said fluid circulating in the engine is lubricating oil of the engine.

6. The cooling system according to any one of the previous claims, wherein the actuation means (14) has inside a tank (15) filled up with thermoexpansible material (16), the expansion thereof determining the translation of a piston (17) within the tank (15), the piston (17) being connected to an actuation rod (18) operating said clutch (11).

7. A motorcycle comprising a cooling system of any of the previous claims.

## Patentansprüche

1. Kühlsystem für einen Verbrennungsmotor mit einem Kühlgebläse (8), das mittels einer Kupplung (11) an einem distalen Ende einer Betätigungswelle (4) angebracht ist, die innerhalb ein Gehäuse (12) zur Aufnahme einer Betätigungseinrichtung der Kupplung (11) aufweist, die empfindlich für die Temperatur eines Fluids ist, das in dem Motor zirkuliert, wobei die Betätigungseinrichtung ein thermisch expandierbares Material aufweist, das sein Volumen vergrößert, wenn die Temperatur ansteigt, wobei die Betätigungseinrichtung (14) ausgebildet ist, um die Kupplung (11) durch eine erste Feder (19) zu betätigen, die innerhalb des Gehäuses (12) zwischen der Betätigungseinrichtung (14) und der Kupplung (11) angeordnet ist, um so die Kupplung (11) von einer Nicht-Betriebs-Position in eine Betriebsposition zu verschieben, um die Betätigung der Kupplung (11) zu erreichen, und wobei ein distales Ende der ersten Feder (19) mit einem ersten Kupplungselement (20) der Kupplung (11) verbunden ist, wobei das erste Kupplungselement (20) auf ein zweites Kupplungselement (22) wirkt, das zu ihm gerichtet ist, wobei eine Kupplungs-Lösefeder (21) zwischen dem ersten Kupplungselement (20) und dem zweiten Kupplungselement (22) vorgesehen ist.

2. Kühlsystem nach Anspruch 1, wobei die Betätigungseinrichtung ein Wachs-Aktuator (14) ist.

3. Kühlsystem nach Anspruch 1 oder 2, wobei die Betätigungswelle mit der Kurbelwelle (4) des abzukühlen Motors zusammenfällt.

4. Kühlsystem nach Anspruch 3, wobei die Kurbelwelle (4) mindestens eine Leitung (13) zum Zirkulieren des Fluids in dem Gehäuse (12) aufweist.

5. Kühlsystem nach Anspruch 4, wobei das Fluid, das in dem Motor zirkuliert, Schmieröl des Motors ist.

6. Kühlsystem nach einem der vorstehenden Ansprüche, wobei die Betätigungseinrichtung (14) innen einen Tank (15) aufweist, der mit thermisch expandierbarem Material (16) gefüllt ist, wobei dessen Ausdehnung die Translation eines Kolbens (17) innerhalb des Tanks (15) bestimmt, wobei der Kolben (17) mit einem Betätigungsstab (18) verbunden ist, der die Kupplung (11) betätigt.

7. Motorrad mit einem Kühlsystem nach einem der vorstehenden Ansprüche.

## Revendications

1. Un système de refroidissement de moteur à combustion interne, comprenant un ventilateur de refroidissement (8) claveté, au moyen d'un embrayage (11), à une extrémité distale d'un arbre d'actionnement (4) ayant en son sein un logement (12) logeant des moyens d'actionnement de l'embrayage (11) sensibles à la température d'un fluide circulant dans le moteur, dans lequel lesdits moyens d'actionnement comprennent un matériau thermo-expansible dont la volumétrie augmente lorsque la température croît, lesdits moyens d'actionnement (14) étant aptes à actionner ledit embrayage (11), par l'intermédiaire d'un premier ressort (19) agencé à l'intérieur dudit logement (12), interposé entre lesdits moyens d'actionnement (14) et ledit embrayage (11), de manière à faire passer ledit embrayage (11) d'une position non active à une position active, pour réaliser l'actionnement dudit embrayage (11) ; et dans lequel une extrémité distale du premier ressort (19) est connectée à un premier élément d'embrayage (20) de l'embrayage (11), ledit premier élément d'embrayage (20) agissant sur un deuxième élément d'embrayage (22) lui faisant face, un ressort de détachement d'embrayage (21) étant prévu entre le premier élément d'embrayage (20) et le deuxième élément d'embrayage (22).

2. Le système de refroidissement selon la revendication 1, dans lequel les moyens d'actionnement sont un actuateur à cire (14).

3. Le système de refroidissement selon la revendication 1 ou 2, dans lequel l'arbre d'actionnement coïncide avec le vilebrequin (4) du moteur à refroidir.

4. Le système de refroidissement selon la revendication 3, dans lequel le vilebrequin (4) comprend au moins un conduit (13) pour la circulation dudit fluide dans ledit logement (12).

5. Le système de refroidissement selon la revendication 4, dans lequel ledit fluide circulant dans le moteur est l'huile de lubrification du moteur.

6. Le système de refroidissement selon l'une quelconque des revendications précédentes, dans lequel les moyens d'actionnement (14) ont en leur sein un réservoir (15) rempli de matériau thermo-expansible (16) dont l'expansion détermine le déplacement d'un piston (17) dans le réservoir (15), le piston (17) étant connecté à une tige d'actionnement (18) actionnant ledit embrayage (11).

7. Une moto comprenant un système de refroidissement selon l'une quelconque des revendications précédentes.
